(19) **Europäisches Patentamt European Patent Office Office européen des brevets**

(11) **EP 4 550 628 A1**

(12) **EUROPEAN PATENT APPLICATION**
published in accordance with Art. 153(4) EPC

(43) Date of publication:
07.05.2025 Bulletin 2025/19

(21) Application number: 23829427.6

(22) Date of filing: 22.02.2023

(51) International Patent Classification (IPC):
$H02K\ 1/27$ (2022.01)    $H02K\ 1/274$ (2022.01)
$H02K\ 1/2789$ (2022.01)    $H02K\ 21/12$ (2006.01)

(52) Cooperative Patent Classification (CPC):
H02K 1/27; H02K 1/274; H02K 1/2789; H02K 21/12

(86) International application number:
PCT/CN2023/077678

(87) International publication number:
WO 2024/001234 (04.01.2024 Gazette 2024/01)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 29.06.2022 CN 202210784919

(71) Applicant: BYD Company Limited
Shenzhen, Guangdong 518118 (CN)

(72) Inventors:
• LIU, Xingjia
Shenzhen, Guangdong 518118 (CN)
• WANG, Tianlu
Shenzhen, Guangdong 518118 (CN)
• WU, Shixun
Shenzhen, Guangdong 518118 (CN)
• QI, Wenming
Shenzhen, Guangdong 518118 (CN)

(74) Representative: Mathys & Squire
The Shard
32 London Bridge Street
London SE1 9SG (GB)

(54) **ROTOR AND MOTOR**

(57) A rotor (100) and a motor. The rotor (100) comprises: a rotor core (1) and a plurality of permanent magnets (2), wherein the rotor core (1) is provided with a plurality of mounting grooves, the plurality of permanent magnets (2) are arranged in the plurality of mounting grooves in a one-to-one correspondence manner, materials of the permanent magnets (2) in the at least two mounting grooves are different, the plurality of mounting grooves comprise a first mounting groove (11), and a permanent magnet (2) arranged in the first mounting groove (11) comprises a first magnet (21) and a second magnet (22) which are arranged in a segmented manner.

FIG. 2

**Description**

**CROSS-REFERENCE TO RELATED APPLICATIONS**

The present disclosure claims priority to Chinese Patent Application 202210784919.9 filed on June 29, 2022, which is incorporated herein by reference in its entirety.

**FIELD**

The present disclosure relates to the field of motors, and in particular, to a rotor and a motor.

**BACKGROUND**

Permanent-magnet synchronous motors are widely used in electric vehicles. A motor is one of cores of an electric drive system. Overall performance of a motor directly affects performance of an electric vehicle. Currently, in terms of development of a demagnetization-resistant permanent-magnet synchronous motor (PMSM) with a high overload capability for an electric vehicle, there is still a technical bottleneck including a series of problems such as a large cogging torque, high costs as well as a poor load torque, and there is room for improvement.

**SUMMARY**

The present disclosure is intended to resolve at least one of the technical problems in the related art to some extent.

Therefore, an objective of the present disclosure is to provide a rotor. By mounting a permanent magnet in each of a plurality of mounting grooves of the rotor, and dividing a permanent magnet arranged in a first mounting groove into two uneven segments, a cogging torque generated during rotation of the rotor is reduced, to help improve stability of the rotor. In addition, by setting different materials for a plurality of sets of permanent magnets, a usage quantity of rare earth materials is reduced, and costs are reduced.

The rotor according to an embodiment of the present disclosure includes: a rotor core, the rotor core being provided with a plurality of mounting grooves; and a plurality of permanent magnets, the plurality of permanent magnets being arranged in the plurality of mounting grooves in a one-to-one correspondence manner, and materials of permanent magnets in at least two of the mounting grooves being different; where the plurality of mounting grooves include first mounting grooves, and a permanent magnet arranged in the first mounting groove includes a first magnet and a second magnet that are arranged in a segmented manner.

For the rotor according to this embodiment of the present disclosure, the rotor is provided with a plurality of mounting grooves. By mounting a permanent magnet in each of a plurality of mounting grooves, and arranging a permanent magnet arranged in a first mounting groove in a segmented manner, a cogging torque generated during rotation of the rotor is reduced, thereby reducing torque fluctuation caused by the cogging torque and reducing jitter caused by the torque fluctuation. In addition, different materials of permanent magnets in at least two mounting grooves help reduce the usage quantity of rare earth materials and reduce the costs.

For the rotor according to some embodiments of the present disclosure, a first material is used for the permanent magnet in the first mounting groove, and the first material is ferrite.

For the rotor according to some embodiments of the present disclosure, the first mounting grooves are arranged in a circumferential direction of the rotor core.

For the rotor according to some embodiments of the present disclosure, the plurality of mounting grooves further include second mounting grooves, and the second mounting grooves are arranged on a radial outer side of the first mounting grooves.

For the rotor according to some embodiments of the present disclosure, a permanent magnet arranged in the second mounting groove includes a third magnet and a fourth magnet that are arranged in a segmented manner.

For the rotor according to some embodiments of the present disclosure, a second material different from the first material is used for the permanent magnet arranged in the second mounting groove, and the second material is a rare earth material.

For the rotor according to some embodiments of the present disclosure, in a width direction of the first mounting groove, a width of the first magnet is W1, and a width of the second magnet is W2; and in a width direction of the second mounting groove, a width of the third magnet is W3, and a width of the fourth magnet is W4; where the rotor satisfies the following relational formula: $0.1 (W3+W4) \leq (W1+W2) \leq 3.3 (W3+W4)$.

For the rotor according to some embodiments of the present disclosure, the rotor satisfies the following relational formula: $0.3 (W3+W4) \leq (W1+W2) \leq 1.95 (W3+W4)$.

For the rotor according to some embodiments of the present disclosure, the plurality of mounting grooves further include third mounting grooves, the third mounting grooves extend in a radial direction of the rotor core, a third mounting groove is correspondingly arranged on each of both sides of a length direction of each of the first mounting grooves, and a length direction of the third mounting groove and the length direction of the first mounting groove have an angle.

For the rotor according to some embodiments of the present disclosure, a permanent magnet in the third mounting groove includes a fifth magnet and a sixth magnet that are arranged in a segmented manner.

For the rotor according to some embodiments of the present disclosure, a material of the permanent magnet in the third mounting groove is a rare earth material.

For the rotor according to some embodiments of the present disclosure, on a cross section perpendicular to a rotation axis of the rotor core, the rotor satisfies the following relational formula: $2.5\frac{L2}{L1} \leq \frac{L3}{L1} \leq 3.1\frac{L3}{L2}$; where L1 is a distance from an outermost side of the second mounting groove to an outer edge of the rotor core, L2 is a distance from an outermost side of the third mounting groove to the outer edge of the rotor core, and L3 is a distance from an outermost side of the first mounting groove to the outer edge of the rotor core.

For the rotor according to some embodiments of the present disclosure, the rotor satisfies the following relational formula: $2.52\frac{L2}{L1} \leq \frac{L3}{L1} \leq 1.07\frac{L3}{L2}$.

For the rotor according to some embodiments of the present disclosure, on a cross section perpendicular to the rotation axis of the rotor core, a length of a first connection line between a geometric center of the fourth magnet and a center of the rotor core is L4; a length of a second connection line between a geometric center of the third magnet and the center of the rotor core is L5; and

an angle between the first connection line and a d-axis of the rotor core is $\alpha 1$, an angle between the second connection line and the d-axis is $\alpha 2$, a width of the fourth magnet is W4, a width of the first magnet is W1, and the rotor satisfies the following relational formula:

$$0.1 * L4\frac{\cos 3a1}{\cos 3a2} \leq W1/W4 \leq 0.12 * L5\frac{\cos 3a1}{\cos 3a2}.$$

For the rotor according to some embodiments of the present disclosure, on a cross section perpendicular to the rotation axis of the rotor core, a length of a third connection line between a geometric center of the fifth magnet and the center of the rotor core is L6; a length of a fourth connection line between a geometric center of the sixth magnet and the center of the rotor core is L7; and an angle between the third connection line and a d-axis of the rotor core is $\alpha 3$, an angle between the fourth connection line and the d-axis is $\alpha 4$, a width of the third magnet is W3, a width of the second magnet is W2, and the rotor satisfies the following relational formula:

$$0.13 * L7\frac{\cos 3a4}{\cos 3a3} \leq W2/W3 \leq 0.13 * L6\frac{\cos 3a4}{\cos 3a3}.$$

For the rotor according to some embodiments of the present disclosure, on a cross section perpendicular to the rotation axis of the rotor core, a length of a fifth connection line between a geometric center of the first magnet and the center of the rotor core is L8; a length of a sixth connection line between a geometric center of the second magnet and the center of the rotor core is L9; and

an angle between the fifth connection line and a d-axis of the rotor core is $\alpha 5$, an angle between the sixth connection line and the d-axis is $\alpha 6$, a width of the fifth magnet is W5, a width of the second magnet is W2, and the rotor satisfies the following relational formula:

$$0.14 * L8\frac{\cos 3a6}{\cos 3a5} \leq W2/W5 \leq 0.18 * L9\frac{\cos 3a6}{\cos 3a5}.$$

For the rotor according to some embodiments of the present disclosure, the rotor satisfies the following relational formula:

$$0.19 * L8\frac{\cos 3a6}{\cos 3a5} \leq W2/W5 \leq 0.13 * L9\frac{\cos 3a6}{\cos 3a5}.$$

For the rotor according to some embodiments of the present disclosure, on a cross section perpendicular to the rotation axis of the rotor core, a length of a first connection line between a geometric center of the fourth magnet and a center of the rotor core is L4;

a length of a second connection line between a geometric center of the third magnet and the center of the rotor core is L5; and

the length of the third connection line between the geometric center of the fifth magnet and the center of the rotor core is L6;

where the rotor satisfies the following relational formula:

$$1.01\frac{L4}{L5} \leq \frac{L4}{L6} \leq 1.1\frac{L5}{L6}.$$

For the rotor according to some embodiments of the present disclosure, the rotor satisfies the following relational formula:

$$1.04\frac{L4}{L5} \leq \frac{L4}{L6} \leq 0.9\frac{L5}{L6}.$$

For the rotor according to some embodiments of the present disclosure, in the circumferential direction of the rotor core, a ratio of a length of the first magnet to a length of the second magnet is greater than or equal to 1/7 and less than or equal to 1/2, and a ratio of a length of the third magnet to a length of the fourth magnet is greater than or equal to 1/7 and less than or equal to 1/2; and in a radial direction of the rotor core, a ratio of a length of the fifth magnet to a length of the sixth magnet is greater than or equal to 1/7 and less than or equal to 1/2.

For the rotor according to some embodiments of the present disclosure, in the radial direction of the rotor core, widths of the first magnet and the second magnet are in a value range of 5 mm to 12 mm, and widths of the third magnet and the fourth magnet are in a value range of 2 mm to 7 mm; and in the circumferential direction of the rotor core, widths of the fifth magnet and the sixth magnet are in a value range of 2 mm to 7 mm.

The present disclosure further provides a motor.

The motor according to an embodiment of the present disclosure includes the rotor according to any one of the foregoing embodiments.

For the motor according to this embodiment of the present disclosure, the rotor includes a rotor core and a plurality of permanent magnets. The rotor core is provided with a plurality of mounting grooves. The plurality of permanent magnets are arranged in the plurality of mounting grooves in a one-to-one correspondence manner, and materials of permanent magnets in at least two of the mounting grooves are different. The plurality of mounting grooves include first mounting grooves, and a permanent magnet in the first mounting groove includes a first magnet and a second magnet that are arranged in a segmented manner. By arranging a permanent magnet arranged in a first mounting groove in a segmented manner, a cogging torque generated during rotation of the rotor is reduced, thereby reducing torque fluctuation caused by the cogging torque and reducing jitter caused by the torque fluctuation. In addition, different materials are set for permanent magnets in at least two mounting grooves on the rotor, to help reduce the usage quantity of rare earth materials, reduce the costs, and improve NVH performance of the motor.

Other aspects and advantages of the present disclosure will be given in the following description, some of which will become apparent from the following description or may be learned from practices of the present disclosure.

## BRIEF DESCRIPTION OF THE DRAWINGS

FIG. 1 is a schematic diagram of a rotor according to an embodiment of the present disclosure;
FIG. 2 is a schematic partial view of a rotor core according to an embodiment of the present disclosure;
FIG. 3 is a schematic partial view of a rotor core according to an embodiment of the present disclosure;
FIG. 4 is a schematic partial view of a rotor core according to an embodiment of the present disclosure;
FIG. 5 is a schematic partial view of a rotor core according to another embodiment of the present disclosure;
FIG. 6 is a schematic diagram of a cogging torque using the same non-segmented permanent magnet material in the related art;
FIG. 7 is a schematic diagram of a torque fluctuation using the same non-segmented permanent magnet material in the related art;
FIG. 8 is a schematic diagram of a cogging torque of a rotor with different segmented permanent magnet materials according to an embodiment of the present disclosure; and
FIG. 9 is a schematic diagram of a torque fluctuation of a rotor with different segmented permanent magnet materials according to an embodiment of the present disclosure.

In the drawings:

rotor 100,
rotor core 1, first mounting groove 11, second mounting groove 12, third mounting groove 13,
permanent magnet 2, first magnet 21, second magnet 22, third magnet 23, fourth magnet 24, fifth magnet 25, and sixth magnet 26.

## DETAILED DESCRIPTION

The following describes embodiments of the present disclosure in detail. Examples of the embodiments are shown in the accompanying drawings, and same or similar reference signs in all the accompanying drawings indicate same or similar components or components having same or similar functions. The embodiments described below with reference to the accompanying drawings are exemplary, and are intended to explain the present disclosure and cannot be construed as a limitation to the present disclosure.

A rotor 100 according to the embodiments of the present disclosure is described below with reference to the accompanying drawings.

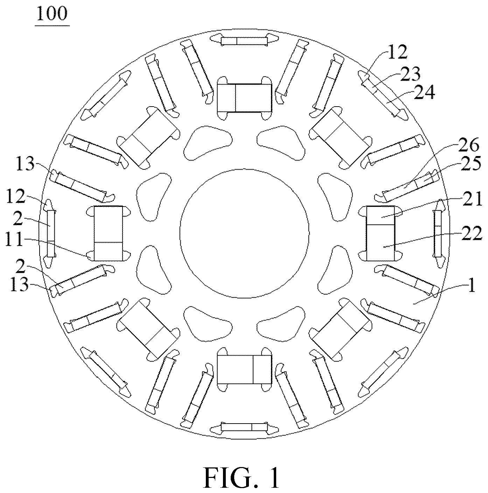

As shown in FIG. 1 to FIG. 9, the rotor 100 according to this embodiment of the present disclosure includes: a rotor core 1 and a plurality of permanent magnets 2. The rotor core 1 is provided with a plurality of mounting grooves. The plurality of permanent magnets 2 are arranged in the plurality of mounting grooves in a one-to-one correspondence manner, and materials of permanent magnets 2 in at least two mounting grooves are different. The plurality of mounting grooves include first mounting grooves 11, and a permanent magnet 2 arranged in the first mounting groove 11 includes a first magnet 21 and a second magnet 22 that are arranged in a segmented manner.

Therefore, by mounting a permanent magnet 2 in each of the plurality of mounting grooves of the rotor core 1, and arranging a permanent magnet 2 arranged in a first mounting groove 11 in a segmented manner, a cogging torque generated during rotation of the rotor 100 is reduced, thereby reducing torque fluctuation caused by the cogging torque and reducing jitter caused by the torque fluctuation. The segmentation of the first magnet may be set to even segmentation or uneven segmentation. When the first magnet is unevenly segmented, the effect is better in reducing the cogging torque. In addition, different materials are set for permanent magnets 2 in different mounting grooves. For example, permanent magnets in some mounting grooves are rare earth permanent magnets, and permanent magnets in some mounting grooves are ferrite permanent magnets. In this way, a usage quantity of rare earth permanent magnets in the rotor 100 is reduced, and costs of the rotor 100 are reduced.

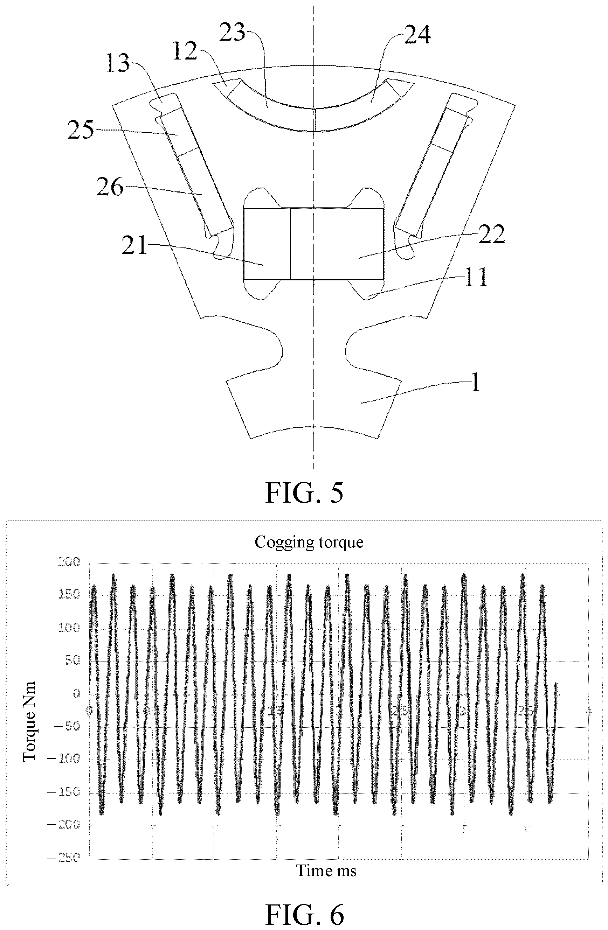

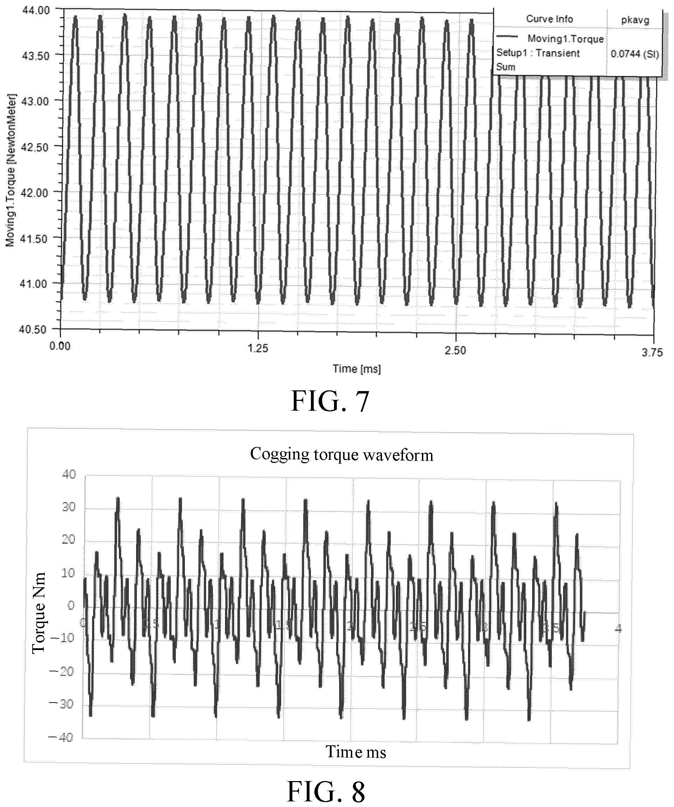

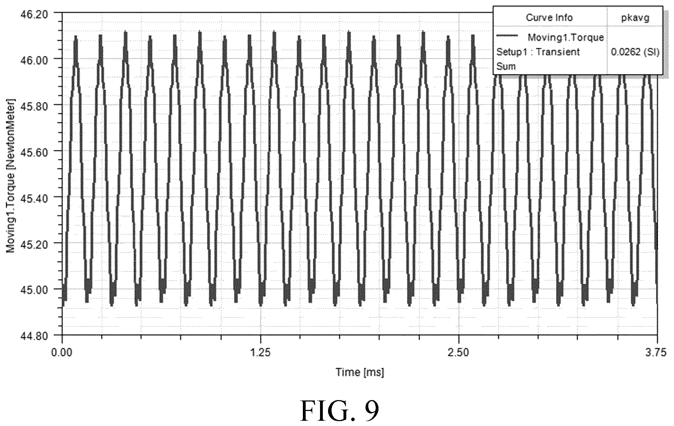

As shown in FIG. 6 to FIG. 9, FIG. 6 is a schematic diagram of a waveform of a cogging torque using the same non-segmented permanent magnet material in the related art, where the value of the cogging torque is 181.02 Nm; FIG. 7 is a schematic diagram of a torque fluctuation using the same non-segmented permanent magnet material in the related art, where the value of the torque fluctuation is 7.44%; FIG. 8 is a schematic diagram of a waveform of a cogging torque of a rotor with different segmented permanent magnet materials according to an embodiment of the present disclosure, where the value of the cogging torque is 32.94 Nm; and FIG. 9 is a schematic diagram of a torque fluctuation of a rotor with different segmented permanent magnet materials according to an embodiment of the present disclosure, where the value of the torque fluctuation is 2.62%. The values of the cogging torques cannot be obtained visually in the figures, and are relevant data recorded in an experimental process. However, there is no doubt that a person skilled in the art obtains relevant values of the cogging torques based on the waveforms.

According to a simulation result, compared with non-segmented magnetic steel, after magnetic steel is unevenly segmented, the cogging torque decreases by 148.08 mNm, that is, the cogging torque decreases by 81.8%, and the value of the torque fluctuation decreases by 4.82%. Therefore, compared with the related art, according to the embodiments of the present disclosure, there is a significant effect in reducing the cogging torque and the torque fluctuation.

For example, referring to FIG. 1 to FIG. 5, the rotor 100 is formed by superimposing a plurality of rotor cores 1 in an axial direction. Each rotor core 1 is constructed into an annular structure. The plurality of rotor cores 1 are sequentially stacked in an axial direction of the rotor 100 to define the rotor 100. The rotor core 1 is provided with a plurality of mounting groove sets in a circumferential direction. The plurality of mounting groove sets are evenly arranged at intervals in the circumferential direction of the rotor core 1. Each mounting groove set may include a plurality of mounting grooves arranged at intervals, and a permanent magnet 2 is mounted in each mounting groove, so that the rotor 100 is provided with a plurality of sets of permanent magnets 2 arranged at intervals. The permanent magnet in the first mounting groove of the rotor core 1 is arranged in a segmented manner, so that a cogging torque generated during rotation of the rotor 100 can be reduced.

The plurality of mounting grooves include first mounting grooves 11, and a permanent magnet 2 mounted in the first mounting groove 11 includes a first magnet 21 and a second magnet 22. The first magnet 21 and the second magnet 22 are arranged in a segmented manner. The first magnet 21 and the second magnet 22 are arranged in sequence in a length direction of the first mounting groove 11. A width dimension of the first magnet 21 is equal to a width dimension of the second magnet 22, so that an end of the first magnet 21 in the length direction and an end of the second magnet 22 in the length direction can directly face each other, and can be connected in a form of gluing or welding. In addition, a length dimension of the first magnet 21 is different from a length dimension of the second magnet 22, and a length ratio between the first magnet 21 and the second magnet 22 may be generally set to 1:2 to 1:7. For example, the length dimension of the second magnet 22 may be set to twice the length dimension of the first magnet 21. This is not limited in the present disclosure.

It should be noted that according to the principle of the superposition method, a total cogging torque of each pole of the motor may be simplified into a superposition of a cogging torque generated by each segment of the permanent magnet 2, which satisfies:

$$\mathrm{Tcog}(\alpha) = \sum_{m=1}^{Ns} \sum_{n=1}^{\infty} \mathrm{Tn\,sin\{nNpZ\}} [\alpha + (m-1)\Delta\beta]$$

in the expression: Ns is a quantity of segments of the permanent magnet 2; Tn is a cogging torque amplitude of an $n^{th}$ harmonic; Np is a quantity of cogging torque cycles of one pitch; Z is a quantity of grooves; and $\Delta\beta$ is an offset angle between two adjacent segments of the permanent magnet 2. The quantity of cogging torque cycles of one pitch: Np = 2p/GCD(Z, 2p), where GCD(Z, 2p) represents a greatest common divisor of Z and 2p. It can be seen from the foregoing formula that, by changing the quantity Ns of segments of the permanent magnet 2, the total cogging torque of each pole can be effectively weakened.

Therefore, the permanent magnet 2 may be arranged in a segmented manner, and the permanent magnet 2 arranged in the first mounting groove 11 is divided into a two-segment structure, including the first magnet 21 and the second magnet 22, to reduce the cogging torque, thereby reducing the torque fluctuation caused by the cogging torque, and reducing the jitter problem caused by the unstable output caused by the torque fluctuation. The first mounting groove may be a mounting groove located in an inner-layer permanent magnet, a mounting groove located in an outer-layer permanent magnet, or a mounting groove located in a permanent magnet extending in a radial direction, among the plurality of mounting grooves in each mounting groove set. Each of the inner layer and the outer layer is relative to the shaft hole of the rotor core. The mounting groove in the inner-layer permanent magnet is close to the shaft hole in the radial direction. The mounting groove in the outer-layer permanent magnet is away from the shaft hole in the radial direction. Therefore, the "first" of the first mounting groove in this embodiment is not intended to be limiting. Arranging a permanent magnet in any mounting groove in a mounting groove set on the rotor core 1 in a segmented manner falls within the protection scope of the present disclosure.

In addition, different materials may be set for permanent magnets 2 in at least two mounting grooves. For example, the permanent magnet 2 arranged in the first mounting groove 11 may be set as a ferrite permanent magnet, the ferrite permanent magnet is arranged in a segmented manner, and a permanent magnet 2 in another mounting groove is set as a rare earth permanent magnet; or the permanent magnet 2 arranged in the first mounting groove 11 is set as a rare earth permanent magnet, and a permanent magnet 2 in another mounting groove is set as a ferrite permanent magnet. This is not limited in the present disclosure. Therefore, a usage quantity of rare earth permanent magnets is reduced, and the costs of the permanent magnet 2 are reduced.

More preferably, the first mounting groove 11 is a mounting groove in the inner-layer permanent magnet, and the second mounting groove 12 is located on a radial outer side of the first mounting groove 11. The first mounting groove 11 extends in a circumferential direction of the rotor core 1, and the second mounting groove 12 extends in the circumferential direction of the rotor core 1. A first material is used for the permanent magnet in the first mounting groove 11, and the first material is a ferrite material and is arranged in a segmented manner. The ferrite material includes a first magnet 21 and a second magnet 22. A permanent magnet material in another mounting groove is different from the ferrite permanent magnet material in the first mounting groove. For example, the another permanent magnet material is a rare earth permanent magnet material. Setting different materials for permanent magnets 2 in different mounting grooves helps reduce a usage quantity of rare earth materials and reduce costs. In addition, by arranging the ferrite permanent magnet 2 arranged in the first mounting groove 11 in a segmented manner, a cogging torque generated during rotation of the rotor 100 is reduced, thereby reducing torque fluctuation caused by the cogging torque and reducing jitter caused by the torque fluctuation.

The permanent magnet 2 arranged corresponding to the second mounting groove 12 includes a third magnet 23 and a fourth magnet 24 that are arranged in a segmented manner. The second mounting groove 12 is located on a radial outer side of the first mounting groove 11, that is, the second mounting groove 12 is a mounting groove for an outer-layer permanent magnet.

For example, referring to FIG. 1, the rotor core 1 may be provided with a plurality of mounting groove sets. Each mounting groove set includes a plurality of mounting grooves. Each mounting groove set includes a second mounting groove 12. The second mounting groove 12 is spaced apart from the first mounting groove 11, and the second mounting groove 12 is located on a radial outer side of the first mounting groove 11. A permanent magnet 2 is arranged in the second mounting groove 12. The permanent magnet 2 arranged in the second mounting groove 12 includes a third magnet 23 and a fourth magnet 24 that are arranged in a segmented manner. The third magnet 23 and the fourth magnet 24 are arranged in sequence in a length direction of the second mounting groove 12. A width dimension of the third magnet 23 is equal to a width dimension of the fourth magnet 24, so that an end of the third magnet 23 in the length direction and an end of the fourth magnet 24 in the length direction can directly face each other, and can be connected in a form of gluing or welding.

A second material different from the first material is used for the permanent magnet 2 in the second mounting groove 12, and the second material is a rare earth material. That is, the third magnet 23 and the fourth magnet 24 are a rare earth permanent magnet material.

In some embodiments of the present disclosure, in a width direction of the first mounting groove 11, a width of the first magnet 21 is W1, and a width of the second magnet 22 is W2; and in a width direction of the second mounting groove 12, a width of the third magnet 23 is W3, and a width of the fourth magnet 24 is W4. The following relational formula is satisfied: $0.1 (W3+W4) \leq (W1+W2) \leq 3.3 (W3+W4)$.

For example, referring to FIG. 1 to FIG. 5, the first mounting groove 11 and the second mounting groove 12 may be arranged to extend in the circumferential direction of the rotor core 1, and a radial direction of the rotor core 1 is set as a width direction of the first mounting groove 11 and a width direction of the second mounting groove 12. The first magnet 21 and the second magnet 22 are arranged in the first mounting groove 11. A width dimension of the first magnet 21 in the width direction of the first mounting groove 11 is set as W1, and a width dimension of the second magnet 22 in the width direction of the first mounting groove 11 is set as W2. The third magnet 23 and the fourth magnet 24 are arranged in the second mounting groove 12. A width dimension of the third magnet 23 in the width direction of the second mounting groove 12 is set as W3, and a width dimension of the fourth magnet 24 in the width direction of the second mounting groove 12 is set as W4.

The following relational formula is satisfied: $0.1 (W3+W4) \leq (W1+W2) \leq 3.3 (W3+W4)$. In other words, a value obtained by adding the width dimension W1 of the first magnet 21 to the width dimension W2 of the second magnet 22 is greater than or equal to 0.1 times a value obtained by adding the width dimension W3 of the third magnet 23 to the width dimension W4 of the fourth magnet 24, and is less than or equal to 3.3 times a value obtained by adding the width dimension W3 of the third magnet 23 to the width dimension W4 of the fourth magnet 24. Therefore, by changing the width of the magnet, the magnetic performance of the magnet is changed, thereby adjusting the working point of the permanent magnet. Generally, under the same condition, if the width of the magnet becomes larger, the performance of the magnet becomes better. When an externally applied magnetic field is applied, if a hysteresis curve of the magnet cannot be restored to the point before the externally applied magnetic field is applied after the magnet is removed from the externally applied magnetic field, it is necessary to apply a larger external demagnetizing field than that before the width of the magnet is increased or other influence of demagnetizing the magnetic steel. However, the width of the magnet cannot be infinitely expanded. An excessively large magnet makes a mounting groove larger, and the larger mounting groove leads to a decrease in the strength of the rotor core. Therefore, the width relationship among the first magnet, the second magnet, the third magnet, and the fourth magnet is limited to the foregoing range, thereby improving the layout rationality of the magnets 2, to help improve the demagnetization resistance of the rotor 100. More preferably, the following relational formula is satisfied: $0.3 (W3+W4) \leq (W1+W2) \leq 1.95 (W3+W4)$, which is more significant in effects such as anti-demagnetization.

In some embodiments of the present disclosure, the width of the first magnet 21 and the width of the second magnet 22 are both in a value range of 5 mm to 12 mm. For example, the width of the first magnet 21 and the width of the second magnet 22 may be set to 6 mm; or the width of the first magnet 21 and the width of the second magnet 22 may be set to 8.5 mm; or the width of the first magnet 21 and the width of the second magnet 22 may be set to 11 mm; or the width of the first magnet 21 and the width of the second magnet 22 may be set to any value satisfying a condition. This is not limited in the present disclosure.

In some embodiments of the present disclosure, the plurality of mounting grooves further include third mounting grooves 13, the third mounting grooves 13 extend in a radial direction of the rotor core 1, a third mounting groove 13 is correspondingly arranged on each of both sides of a length direction of each first mounting groove 11, and a length direction of the third mounting groove 13 and the length direction of the first mounting groove 11 or the second mounting groove 12 have an angle. The permanent magnet 2 arranged corresponding to the third mounting groove 13 includes a fifth magnet 25 and a sixth magnet 26 that are arranged in a segmented manner.

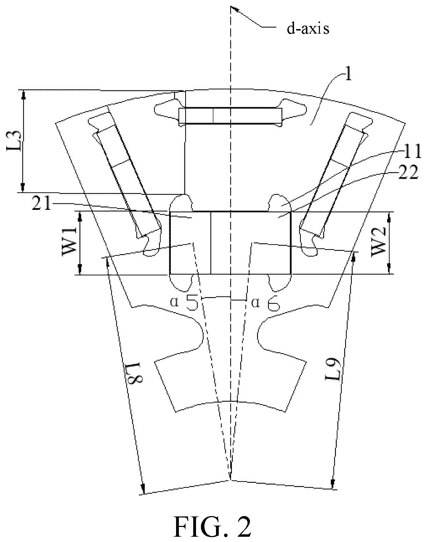

For example, referring to FIG. 2, the rotor core 1 may be provided with a plurality of mounting groove sets. Each mounting groove set has a plurality of mounting grooves. The plurality of mounting grooves of each set includes third mounting grooves 13. The third mounting groove 13 is spaced apart from the first mounting groove 11, and a length direction of the third mounting groove 13 and a length direction of the second mounting groove 12 are different to form an angle. In this way, a permanent magnet 2 arranged in the first mounting groove 11 and a permanent magnet 2 arranged in the third mounting groove 13 may be arranged at different positions of the rotor core 1. The permanent magnet 2 arranged in the third mounting groove 13 includes a fifth magnetic 25 and a sixth magnetic 26. The fifth magnetic 25 and the sixth magnetic 26 are arranged in a segmented manner. An end of the fifth magnetic 25 and an end of the sixth magnetic 26 can directly face each other, and be connected in a form of gluing or welding. Therefore, by dividing the permanent magnet 2 arranged in the third mounting groove 13 into two segments, a cogging torque generated during rotation of the rotor 100 is reduced, thereby reducing torque fluctuation caused by the cogging torque and reducing jitter caused by the torque fluctuation.

Further, the permanent magnet material in the third mounting groove 13 may be a rare earth material, that is, the fifth magnet 25 and the sixth magnet 26 are set as a rare earth permanent magnet material.

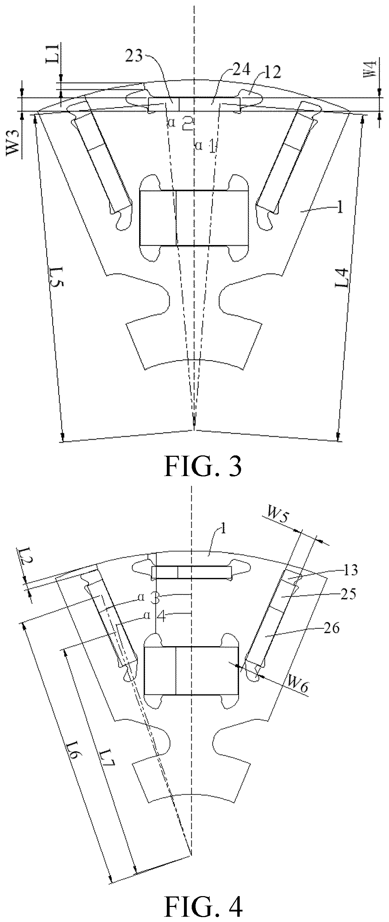

In some embodiments of the present disclosure, in the length direction of the third mounting groove 13, a length of the fifth magnet 25 and a length of the sixth magnet 26 are different. For example, referring to FIG. 3, the fifth magnet 25 and the sixth magnet 26 may be arranged in sequence in a length direction of the third mounting groove 13. A width dimension of the fifth magnet 25 is equal to a width dimension of the sixth magnet 26, so that an end of the fifth magnet 25 in the length direction and an end of the sixth magnet 26 in the length direction can directly face each other and be connected. A length dimension of the fifth magnet 25 and a length dimension of the sixth magnet 26 are set to be different, and a length ratio between the fifth magnet 25 and the sixth magnet 26 may be generally set to 1:2 to 1:7. For example, the length dimension of the sixth magnet 26 may be set to twice the length dimension of the fifth magnet 25; or the length dimension of the sixth magnet 26 may be set to thrice the length dimension of the fifth magnet 25. This is not limited in the present disclosure.

Therefore, by arranging the permanent magnets 2 in a plurality of sets, and dividing the permanent magnet 2 arranged in the third mounting groove 13 into two uneven segments, the cogging torque is reduced, to reduce the torque fluctuation caused by the cogging torque, reduce the jitter caused by the torque fluctuation, and improve the stability of the rotor 100 during rotation.

In some embodiments of the present disclosure, the first mounting grooves 11 extend in a circumferential direction of the rotor core 1, the third mounting grooves 13 extend in a radial direction of the rotor core 1, and a third mounting groove 13 is correspondingly arranged on each of both sides of a length direction of each first mounting groove 11.

For example, referring to FIG. 1 to FIG. 5, a first mounting groove 11 may be provided on a radial inner side of the rotor core 1. The first mounting groove 11 extends in the circumferential direction of the rotor core 1 and is constructed into a straight line shape. The first mounting groove 11 is provided with a first magnet 21 and a second magnet 22. The first magnet 21 and the second magnet 22 are arranged in sequence in the circumferential direction of the rotor core 1. Length dimensions of the first magnet 21 and the second magnet 22 are different, so that a connection position of the first magnet 21 and the second magnet 22 deviates from a middle position of the first mounting groove 11 in the length direction. Two third mounting grooves 13 are provided corresponding to the first mounting groove 11. The two third mounting grooves 13 are respectively provided on both sides of the first mounting groove 11 in the circumferential direction of the rotor core 1. The two third mounting grooves 13 are both arranged in the radial extension of the rotor core 1. A fifth magnet 25 and a sixth magnet 26 are arranged in each of the two third mounting grooves 13. The fifth magnet 25 and the sixth magnet 26 are arranged in sequence in the radial direction of the rotor core 1. Length dimensions of the fifth magnet 25 and the sixth magnet 26 are different, so that a connection position of the fifth magnet 25 and the sixth magnet 26 deviates from a middle position of the third mounting groove 12 in the length direction.

For example, referring to FIG. 5, a second mounting groove 12 may be provided on a radial outer side of the rotor core 1. The second mounting groove 12 extends in the circumferential direction of the rotor core 1, and both ends of the second mounting groove 12 in the length direction obliquely extend toward an outer peripheral wall of the rotor core 1, to construct the second mounting groove 12 into an arc-like structure. A third magnet 23 and a fourth magnet 24 are arranged in the second mounting groove 12. The third magnet 23 and the fourth magnet 24 are correspondingly constructed into arc-like structures. The third magnet 23 and the fourth magnet 24 are arranged in sequence in the length direction of the second mounting groove 12. Length dimensions of the third magnet 23 and the fourth magnet 24 are set to be equal, so that one end of the third magnet 23 and one end of the fourth magnet 24 facing each other can be connected in a middle region of the first mounting groove 11 in the length direction.

It may be understood that, by arranging the first mounting groove 11 to extend in the circumferential direction of the rotor core 1, and a third mounting groove 13 extending in the radial direction of the rotor core 1 is provided on each of both sides of the circumferential direction of the first mounting groove 11, the permanent magnets 2 on the rotor core 1 are properly distributed, which helps reduce a cogging torque during rotation of the rotor 100, to reduce a torque fluctuation caused by the cogging torque, reduce jitter caused by the torque fluctuation, and improve stability during rotation of the rotor 100.

In some embodiments of the present disclosure, the plurality of mounting grooves further include second mounting grooves 12, the permanent magnet 2 arranged corresponding to the second mounting groove 12 includes a third magnet 23 and a fourth magnet 24 that are arranged in a segmented manner. The second mounting groove 12 is located on a radial outer side of the first mounting groove 11.

For example, referring to FIG. 4, the rotor core 1 may be provided with a plurality of mounting groove sets. Each mounting groove set has a plurality of mounting grooves. The plurality of mounting grooves of each mounting groove set includes a second mounting groove 12. The second mounting groove 12 is spaced apart from the first mounting groove 11 and the third mounting groove 13, and the second mounting groove 12 is located on a radial outer side of the first mounting groove 11. A segmented permanent magnet 2 is arranged in the second mounting groove 11. The permanent magnet 2 arranged in the second mounting groove 12 includes a third magnet 23 and a fourth magnet 24. The third magnet 23 and the fourth magnet 24 are arranged in a segmented manner. The third magnet 23 and the fourth magnet 24 are arranged in sequence in a length direction of the first mounting groove 11. A width dimension of the third magnet 23 is equal to a width dimension of the fourth magnet 24, so that an end of the third magnet 23 in the length direction and an end of the fourth magnet 24 in the length direction can directly face each other, and can be connected in a form of gluing or welding.

In addition, a length dimension of the third magnet 23 is different from a length dimension of the fourth magnet 24, and a length ratio between the third magnet 23 and the fourth magnet 24 may be generally set to 1:2 to 1:7. For example, the length dimension of the fourth magnet 24 may be set to twice the length dimension of the third magnet 23. This is not limited in the present disclosure. A length ratio between the first magnet 21 and the second magnet 22 is the same as that in the foregoing content. Therefore, details are not repeated.

For example, referring to FIG. 4, a second mounting groove 12 may be provided in a region on a radial outer side of the rotor core 1. The second mounting groove 12 extends in the circumferential direction of the rotor core 1. A third magnet 23 and a fourth magnet 24 that are sequentially distributed in the length direction are arranged in the second mounting groove 12. A second mounting groove 12 may be provided on a radial outer side of the first mounting groove 11. The second mounting groove 12 extends in the circumferential direction of the rotor core 1. A third magnet 23 and a fourth magnet 24 that are sequentially distributed in the length direction are arranged in the second mounting groove 12.

It may be understood that, by providing a plurality of mounting grooves on the rotor core 1, mounting a permanent magnet 2 in each of the plurality of mounting grooves, and dividing a permanent magnet 2 arranged in a second mounting groove 12 into two uneven segments, a cogging torque generated during rotation of the rotor 100 is reduced, thereby reducing torque fluctuation caused by the cogging torque, reducing jitter caused by the torque fluctuation, and improve stability of the rotor 100 during rotation.

In some embodiments of the present disclosure, the width of the third magnet 23 and the width of the fourth magnet 24 are both in a value range of 2 mm to 7 mm, and the width of the fifth magnet 25 and the width of the sixth magnet 26 are both in a value range of 2 mm to 7 mm. For example, the width of the third magnet 23 and the width of the fourth magnet 24 may be set to 3 mm; or the width of the third magnet 23 and the width of the fourth magnet 24 may be set to 4.5 mm; or the width of the third magnet 23 and the width of the fourth magnet 24 may be set to 6 mm; or the width of the third magnet 23 and the width of the fourth magnet 24 may be set to any value satisfying a condition. This is not limited in the present disclosure. Similarly, the fifth magnet 25 and the sixth magnet 26 are the same as the foregoing, and details are not repeated herein. Therefore, a requirement for high magnetic density of a high-speed motor is realized, weights of the third magnet 23 and the fourth magnet 24 are reduced, a centrifugal force exerted on the rotor 100 during rotation is reduced, and stability of the rotor 100 is improved.

Through the foregoing arrangement, when the motor runs at a high speed, if the permanent magnet 2 arranged in the first mounting groove 11 radiates heat inadequately within a specific temperature range, it can be ensured that the permanent magnet 2 in the second mounting groove 12 is not demagnetized, thereby improving reliability of the rotor 100.

In some embodiments of the present disclosure, on a same cross section perpendicular to a rotation axis of the rotor core 1, a radial distance between an outermost edge of the second mounting groove 12 and the outer peripheral wall of the rotor core 1 is L1, a radial distance between an outermost edge of the third mounting groove 13 and the outer peripheral wall of the rotor core 1 is L2, and a radial distance between an outermost edge of the first mounting groove 11 and the outer peripheral wall of the rotor core 1 is L3. The following relational formula is satisfied: $2.5\frac{L2}{L1} \leq \frac{L3}{L1} \leq 3.1\frac{L3}{L2}$.

For example, referring to FIG. 2 to FIG. 4, the second mounting groove 12 may be arranged to extend in the circumferential direction of the rotor core 1, the outermost edge of the second mounting groove 12 is spaced apart from the outer peripheral wall of the rotor core 1, and the radial distance between the outermost edge of the second mounting groove 12 and the outer peripheral wall of the rotor core 1 is set to L1; the third mounting groove 13 may be arranged to extend in the radial direction of the rotor core 1, the outermost edge of the third mounting groove 13 is spaced apart from the outer peripheral wall of the rotor core 1, and the radial distance between the outermost edge of the third mounting groove 13 and the outer peripheral wall of the rotor core 1 is set to L2; and the first mounting groove 11 may be mounted on an inner side of the second mounting groove 12, the first mounting groove 11 is arranged to extend in the circumferential direction of the rotor core 1, the outermost edge of the first mounting groove 11 is spaced apart from the outer peripheral wall of the rotor core 1, and the radial distance between the outermost edge of the first mounting groove 11 and the outer peripheral wall of the rotor core 1 is set to L3.

L1, L2, and L3 satisfy the following relational formula: $2.5\frac{L2}{L1} \leq \frac{L3}{L1} \leq 1.07\frac{L3}{L2}$. That is to say, a ratio of the radial distance L3 between the outermost edge of the first mounting groove 11 and the outer peripheral wall of the rotor core 1 to the radial distance L1 between the outermost edge of the second mounting groove 12 and the outer peripheral wall of the rotor core 1 is greater than or equal to 2.5 times a ratio of the radial distance L2 between the outermost edge of the third mounting groove 13 and the outer peripheral wall of the rotor core 1 to the radial distance L1 between the outermost edge of the second mounting groove 12 and the outer peripheral wall of the rotor core 1; and the ratio of the radial distance L3 between the outermost edge of the first mounting groove 11 and the outer peripheral wall of the rotor core 1 to the radial distance L1 between the outermost edge of the second mounting groove 12 and the outer peripheral wall of the rotor core 1 is less than or equal to 3.1 times a ratio of the radial distance L3 between the outermost edge of the first mounting groove 11 and the outer peripheral wall of the rotor core 1 to the radial distance L2 between the outermost edge of the third mounting groove 13 and the outer peripheral wall of the rotor core 1. The position of the mounting groove depends on the position of the permanent magnet 2. Therefore, when the distance between the mounting groove and the outer surface of the rotor 100 is changed, the distance between the permanent magnet 2 and the outer surface of the rotor 100 is also changed. A change in the distance between the permanent magnet 2 and the outer surface of the rotor 100 causes a change in the pole arc coefficient. The pole arc coefficient depends on a ratio of the average air gap magnetic density to the maximum air gap magnetic density. Alternatively, the pole arc coefficient is affected by the arc length of the outer surface of the rotor 100 corresponding to the permanent magnet 2 and the length of the magnetic isolation bridge of the magnetic steel. By changing the distance between the permanent magnet 2 and the outermost side of the rotor 100, the arc length of the outer surface of the rotor 100 corresponding to the permanent magnet 2 or the air gap magnetic density is changed. During movement, there is an optimal range of the pole arc coefficient. Within this range, the waveform of the air gap magnetic density is closest to that of a sine wave. Therefore, a relationship among the three distances L1, L2, and L3 is limited to the above range, so that the waveform of the air gap magnetic density is closest to that of a sine wave, there is a small range of the cogging torque, and there is also a small range of the torque fluctuation. In this way, the torque fluctuation and the cogging torque are reduced, and the NVH performance is improved.

More preferably, in an embodiment, when L1, L2, and L3 satisfy the following relational formula:

$$2.52\frac{L2}{L1} \leq \frac{L3}{L1} \leq 1.07\frac{L3}{L2}$$

, reduction in the torque fluctuation of the rotor 100 is also more significant.

In some embodiments of the present disclosure, on a cross section perpendicular to the rotation axis of the rotor core 1, a length of a first connection line between a geometric center of the fourth magnet 24 and a center of the rotor core 1 is L4; a length of a second connection line between a geometric center of the third magnet 23 and the center of the rotor core 1 is L5; and an angle between the first connection line and a d-axis of the rotor core 1 is $\alpha1$, an angle between the second connection line and the d-axis is $\alpha2$, a width of the fourth magnet 24 is W4, a width of the first magnet 21 is W1, and the rotor 100 satisfies the following relational formula:

$$0.1 * L4\frac{\cos 3a1}{\cos 3a2} \leq W1/W4 \leq 0.12 * L5\frac{\cos 3a1}{\cos 3a2}$$

For example, referring to FIG. 2 to FIG. 4, the rotor core 1 is provided with a d-axis. The d-axis extends from a center of the rotor core 1 and radially passes through a center of the first mounting groove 11 in the length direction. A third magnet 23 and a fourth magnet 24 are mounted in the second mounting groove 12. The fourth magnet 24 extends in the length direction of the second mounting groove 12 and is arranged on the right side of the second mounting groove 12. The third magnet 23 extends in the length direction of the second mounting groove 12 and is arranged on the left side of the second mounting groove 12.

A geometric center of the second magnet 22 is located on the right side of the d-axis, and a geometric center of the first magnet 21 is located on the left side of the d-axis. The geometric center of the second magnet 22 and the center of the rotor core 1 may be connected by a first connection line, a length of the first connection line is set to L4, and an angle between the first connection line and the d-axis is set to $\alpha1$; and the geometric center of the second magnet 22 and the center of the rotor core 1 may be connected by a second connection line, a length of the second connection line is set to L5, and an angle between the second connection line and the d-axis is set to $\alpha2$. In addition, the width of the fourth magnet 24 may be set to W4, and the width of the first magnet 25 may be set to W1.

The rotor 100 satisfies the following relational formula: $0.1 * L4\frac{\cos 3a1}{\cos 3a2} \leq W1/W4 \leq 0.12 * L5\frac{\cos 3a1}{\cos 3a2}$.
In other words, the ratio of the width of the first magnet 21 to the width of the fourth magnet 24 is greater than or equal to 0.1 times the length L4 of the first connection line times $\frac{\cos 3a1}{\cos 3a2}$ and is less than or equal to 0.12 times the length L5 of the second connection line times $\frac{\cos 3a1}{\cos 3a2}$. Changing an angle between a line connecting the center of the magnet to the center of the rotor and the d-axis is equivalent to changing the pole arc coefficient of the rotor 100. The pole arc coefficient has an optimal range. In this range, the waveform of the air gap magnetic density is closest to that of a sine wave, and the torque fluctuation is small, so that the cogging torque has a small range. Therefore, by changing the angle between the magnet and the d-axis, and combining the width of the magnet and the distance between the center line of the magnet and the edge of the rotor, the layout rationality of the permanent magnets 2 is improved, which helps reduce the torque fluctuation of the rotor 100, improves the NVH performance, and can further improve the demagnetization resistance of the permanent magnets.

More preferably, in an embodiment, the rotor 100 satisfies the following relational formula:

$$0.11 * L4\frac{\cos 3a1}{\cos 3a2} \leq W1/W4 \leq 0.11 * L5\frac{\cos 3a1}{\cos 3a2}$$ , whose effect is more significant than that in the foregoing content.

In some embodiments of the present disclosure, on a same cross section of the rotor core 1, a length of a third connection line between a geometric center of the fifth magnet 25 and a center of the rotor core 1 is L6; a length of a fourth connection line between a geometric center of the sixth magnet 26 and the center of the rotor core 1 is L7; and an angle between the third connection line and a d-axis of the rotor core 1 is $\alpha 3$, an angle between the fourth connection line and the d-axis is $\alpha 4$, a width of the third magnet 23 is W3, a width of the second magnet 22 is W2, and the rotor 100 satisfies the following relational formula: $$0.13 * L7\frac{\cos 3a4}{\cos 3a3} \leq W2/W3 \leq 0.13 \quad * L6\frac{\cos 3a4}{\cos 3a3}$$ .

For example, referring to FIG. 2 to FIG. 4, a third mounting groove 13 may be provided on each of a left side and a right side of the second mounting groove 12, the two third mounting grooves 13 both extend in the radial direction of the rotor core 1, and the two third mounting grooves 13 are arranged symmetrically along the d-axis of the rotor core 1. A fifth magnet 25 and a sixth magnet 26 are arranged in the third mounting groove 13. The fifth magnet 25 extends in the length direction of the third mounting groove 13 and is arranged on the outer side the third mounting groove 13. The sixth magnet 26 extends in the length direction of the third mounting groove 13 and is arranged on the inner side the third mounting groove 13.

The geometric center of the fifth magnet 25 and the center of the rotor core 1 are connected by a third connection line, a length of the third connection line is set to L6, and an angle between the third connection line and the d-axis of the rotor core 1 is set to $\alpha 3$; and the geometric center of the sixth magnet 26 and the center of the rotor core 1 are connected by a fourth connection line, a length of the fourth connection line is set to L7, and an angle between the fourth connection line and the d-axis of the rotor core 1 is set to $\alpha 4$. The length L7 of the fourth connection line is less than the length L6 of the third connection line, and the angle $\alpha 4$ between the fourth connection line and the d-axis of the rotor core 1 is less than the angle $\alpha 3$ between the third connection line and the d-axis of the rotor core 1. In addition, the width of the third magnet 23 may be set to W3, and the width of the second magnet 22 may be set to W2.

The rotor 100 satisfies the following relational formula:

$$0.13 * L7\frac{\cos 3a4}{\cos 3a3} \leq W2/W3 \leq 0.13 * L6\frac{\cos 3a4}{\cos 3a3}$$ . In other words, the ratio of the width of the second magnet 22 to the width of the third magnet 23 is greater than or equal to 0.13 times the length L7 of the fourth connection line times $\frac{\cos 3a4}{\cos 3a3}$ and is less than or equal to 0.13 times the length L6 of the third connection line times $\frac{\cos 3a4}{\cos 3a3}$. Changing an angle between a line connecting the center of the magnet to the center of the rotor and the d-axis is equivalent to changing the pole arc coefficient of the rotor 100. The pole arc coefficient has an optimal range. In this range, the waveform of the air gap magnetic density is closest to that of a sine wave, and the torque fluctuation is small, so that the cogging torque has a small range. Therefore, by changing the angle between the magnet and the d-axis, and combining the width of the magnet and the distance between the center line of the magnet and the edge of the rotor, the layout rationality of the permanent magnets 2 is improved, which helps reduce the torque fluctuation of the rotor 100, improves the NVH performance, and can further improve the demagnetization resistance of the permanent magnets.

More preferably, in an embodiment, the rotor 100 satisfies the following relational formula:

$$0.15 * L7\frac{\cos 3a4}{\cos 3a3} \leq W2/W3 \leq 0.12 * L6\frac{\cos 3a4}{\cos 3a3}$$ , whose effect is more significant than that in the foregoing content.

In some embodiments of the present disclosure, on a same cross section perpendicular to the rotation axis of the rotor core 1, a length of a fifth connection line between a geometric center of the first magnet 21 and a center of the rotor core 1 is L8; a length of a sixth connection line between a geometric center of the second magnet 22 and the center of the rotor core 1 is L9; and an angle between the fifth connection line and a d-axis of the rotor core 1 is $\alpha 5$, an angle between the sixth connection line and the d-axis is $\alpha 6$, a width of the fifth magnet 25 is W5, a width of the second magnet 22 is W2, and the rotor 100 satisfies the following relational formula: $$0.14 * L8\frac{\cos 3a6}{\cos 3a5} \leq W2/W5 \leq 0.18 * L9\frac{\cos 3a6}{\cos 3a5}$$ .

For example, referring to FIG. 2 to FIG. 4, the rotor core 1 is provided with a d-axis. The d-axis extends from a center of the rotor core 1 and radially passes through a center of the third mounting groove 13 in the length direction. A first magnet 21 and a second magnet 22 are mounted in the first mounting groove 11. The first magnet 21 extends in the length direction of the first mounting groove 11 and is arranged on the left side of the first mounting groove 11. The second magnet 22 extends in the length direction of the first mounting groove 11 and is arranged on the right side of the first mounting groove 11.

A geometric center of the first magnet 21 is located on the left side of the d-axis, and a geometric center of the second magnet 22 is located on the right side of the d-axis. The geometric center of the first magnet 21 and the center of the rotor core 1 may be connected by a fifth connection line, a length of the fifth connection line is set to L8, and an angle between the fifth connection line and the d-axis is set to $\alpha5$; and the geometric center of the second magnet 22 and the center of the rotor core 1 may be connected by a sixth connection line, a length of the sixth connection line is set to L9, and an angle between the sixth connection line and the d-axis is set to $\alpha6$. In addition, the width of the fifth magnet 25 may be set to W5, and the width of the second magnet 22 may be set to W2.

The rotor 100 satisfies the following relational formula:

$$0.14 * L8\frac{\cos 3a6}{\cos 3a5} \leq W2/W5 \leq 0.18 * L9\frac{\cos 3a6}{\cos 3a5}$$

. In other words, the ratio of the width of the second magnet 22 to the width of the fifth magnet 25 is greater than or equal to 0.14 times the length L8 of the fifth connection line times $\frac{\cos 3a6}{\cos 3a5}$ and is less than or equal to 0.18 times the length L9 of the sixth connection line times $\frac{\cos 3a6}{\cos 3a5}$. Changing an angle between a line connecting the center of the magnet to the center of the rotor and the d-axis is equivalent to changing the pole arc coefficient of the rotor 100. The pole arc coefficient has an optimal range. In this range, the waveform of the air gap magnetic density is closest to that of a sine wave, and the torque fluctuation is small, so that the cogging torque has a small range. Therefore, by changing the angle between the magnet and the d-axis, and combining the width of the magnet and the distance between the center line of the magnet and the edge of the rotor, the layout rationality of the permanent magnets 2 is improved, which helps reduce the torque fluctuation of the rotor 100, improves the NVH performance, and can further improve the demagnetization resistance of the permanent magnets.

More preferably, in an embodiment, the rotor 100 satisfies the following relational formula:

$$0.19 * L8\frac{\cos 3a6}{\cos 3a5} \leq W2/W5 \leq 0.13 * L9\frac{\cos 3a6}{\cos 3a5},$$

, whose effect is more significant than that in the foregoing content.

In some embodiments of the present disclosure, on a same cross section perpendicular to the rotation axis of the rotor core 1, a length of a first connection line between a geometric center of the fourth magnet 24 and a center of the rotor core 1 is L4; a length of a second connection line between a geometric center of the first magnet 21 and the center of the rotor core 1 is L5; and a length of a third connection line between the geometric center of the fifth magnet 25 and the center of the rotor core 1 is L6. The following relational formula is satisfied: $1.01\frac{L4}{L5} \leq \frac{L4}{L6} \leq 1.1\frac{L5}{L6}$.

For example, referring to FIG. 2 to FIG. 4, the second mounting grooves 12 extend in a circumferential direction of the rotor core 1, a third magnet 23 and a fourth magnet 24 are arranged in the second mounting groove 12, and the third magnet 23 and the fourth magnet 24 are arranged in sequence in the length direction of the first mounting groove 11. The geometric center of the fourth magnet 24 may be connected to a center of the rotor core 1 through a first connection line, and a length of the first connection line is set to L4. The geometric center of the third magnet 23 may be connected to a center of the rotor core 1 through a second connection line, and a length of the second connection line is set to L5. The third mounting groove 123 extends in the radial direction of the rotor core 1. A fifth magnet 25 is arranged in the third mounting groove 13. The geometric center of the fifth magnet 25 may be connected to a center of the rotor core 1 through a third connection line, and a length of the third connection line is set to L6.

L4, L5, and L6 satisfy the following relational formula: $1.01\frac{L4}{L5} \leq \frac{L4}{L6} \leq 1.1\frac{L5}{L6}$. That is to say, the length L4 of the first connection line is less than or equal to 1.1 times the length L5 of the second connection line; and the length L5 of the second connection line is greater than or equal to 1.01 times the length L6 of the third connection line. Therefore, by changing the distance between the magnetic steel and the outermost side of the rotor, the arc length of the outer surface of the rotor corresponding to the magnetic steel or the air gap magnetic density is changed. During movement, there is an optimal range of the pole arc coefficient. Within this range, the waveform of the air gap magnetic density is closest to that of a sine wave, there is a small range of the cogging torque, and there is also a small range of the torque fluctuation. Therefore, the layout of the permanent magnets 2 is proper, which helps improve the demagnetization resistance of the rotor core 1.

More preferably, in an embodiment, the rotor 100 satisfies the following relational formula:

$$1.04\frac{L4}{L5} \leq \frac{L4}{L6} \leq 0.9\frac{L5}{L6}$$

, whose effect is more significant than that in the foregoing content.

It should be noted that when the rotor core 1 is provided with first mounting grooves 11, second mounting grooves 12, and third mounting grooves 13, a first magnet 21 and a second magnet 22 are arranged in the first mounting groove 11, a third magnet 23 and a fourth magnet 24 are arranged in the second mounting groove 12, and a fifth magnet 25 and a sixth magnet 26 are arranged in the third mounting groove 13, the following conditions are satisfied simultaneously:

$$(1).\ 2.5\frac{L2}{L1} \leq \frac{L3}{L1} \leq 3.1\frac{L3}{L2};$$

$$(2).\ 0.1 * L4\frac{\cos 3a1}{\cos 3a2} \leq W1/W4 \leq 0.12 * L5\frac{\cos 3a1}{\cos 3a2};$$

$$(3).\ 0.13 * L7\frac{\cos 3a4}{\cos 3a3} \leq W2/W3 \leq 0.13 * L6\frac{\cos 3a4}{\cos 3a3};$$

$$(4).\ 0.14 * L8\frac{\cos 3a6}{\cos 3a5} \leq W2/W5 \leq 0.18 * L9\frac{\cos 3a6}{\cos 3a5};$$

$$(5).\ 0.1\,(W3+W4) \leq (W1+W2) \leq 3.3\,(W3+W4);$$

and

$$(6).\ 1.01\frac{L4}{L5} \leq \frac{L4}{L6} \leq 1.1\frac{L5}{L6}.$$

In this case, the overall performance of the motor is best in comprehensive consideration of demagnetization resistance, reduction in the torque fluctuation, and improvement in the NVH performance.

Specifically, referring to FIG. 6 to FIG. 9, when L1, L2, L3, L4, L5, L6, L7, L8, and L9 are reduced, that is, when the permanent magnets 2 move toward the inner side of the rotor core 1, the air gap magnetic density decreases, the performance of the permanent magnets 2 cannot be fully utilized, the output torque decreases, the output power of the motor decreases, and the efficiency of the motor decreases; and when L1, L2, L3, L4, L5, L6, L7, L8, and L9 increase, that is, when the permanent magnets 2 move toward the outer side of the rotor core 1, if running is at a high speed, there is an increased possibility that a chamber scavenging phenomenon may occur. When L1, L2, L3, L4, L5, L6, L7, L8, and L9 increase, magnetic leakage increases, and utilization of the permanent magnets 2 decreases; and when L1, L2, L3, L4, L5, L6, L7, L8, and L9 decrease, the mechanical strength of the rotor decreases, a stress concentration phenomenon easily occurs, the limit rotation speed of the motor decreases, and weak magnetism of the motor is affected.

When $\alpha1$, $\alpha2$, $\alpha3$, $\alpha4$, $\alpha5$, and $\alpha6$ are changed, that is, the air gap magnetic field of the motor is changed, and the load torque and the NVH performance are affected. When the foregoing angles increase from small to large, the arc length spanned by the permanent magnet 2 is changed, thereby affecting the air gap magnetic density of the motor. The air gap magnetic density fluctuates, the output power of the motor fluctuates, and the NVH performance of the motor fluctuates. There is an optimal coefficient range for the foregoing angles, as shown in the foregoing parameter expression formulas. Within the foregoing parameter range, the load torque and the NVH performance of the motor are the best.

When W1, W2, W3, W4, W5, and W6 are increased, the costs of the permanent magnets 2 become larger, and the operating of the permanent magnets 2 is affected, but the demagnetization resistance of the motor is enhanced. When W1, W2, W3, W4, W5, and W6 are reduced, the demagnetization resistance of the permanent magnet 2 is weakened, affecting the output torque of the motor.

When L1, L2, L3, L4, L5, L6, L7, L8, and L9 are changed, $\alpha1$, $\alpha2$, $\alpha3$, $\alpha4$, $\alpha5$, and $\alpha6$ are changed. In this case, there is a fluctuation range in the limit speed, the mechanical strength, and the resistance to magnetic leakage of the motor. When the foregoing parameter relational formulas are satisfied, the limit speed, the mechanical strength, and the resistance to magnetic leakage of the motor can theoretically reach a maximum value allowed by the rotor. When W1, W2, W3, W4, W5, and W6 are changed, the costs, the demagnetization resistance, the load torque, and the NVH performance of the permanent magnet 2 fluctuate; and $\alpha1$, $\alpha2$, $\alpha3$, $\alpha4$, $\alpha5$, and $\alpha6$ are changed with the width of the permanent magnet 2, affecting the pole arc coefficient of the motor, thereby affecting the load torque and the NVH performance of the motor. An optimal range exists for the pole arc coefficient. When the foregoing parameter relational formulas are satisfied, the pole arc coefficient falls within the optimal range, and the load torque and the NVH performance of the motor are the best.

In conclusion, the limit ranges in the foregoing parameter relational formulas should be satisfied. In this case, the performance of the motor is the best in a comprehensive consideration.

The present disclosure further provides a motor.

The motor according to an embodiment of the present disclosure includes the rotor 100 according to any one of the foregoing embodiments. The rotor core 1 is provided with a plurality of mounting grooves. By mounting a permanent magnet 2 in each of a plurality of mounting grooves, and dividing a permanent magnet 2 arranged in a first mounting groove 11 into two uneven segments, a cogging torque generated during rotation of the rotor core 1 is reduced, thereby reducing torque fluctuation caused by the cogging torque and reducing jitter caused by the torque fluctuation. In addition, setting different materials for at least two permanent magnets 2 arranged in different mounting grooves helps reduce the usage quantity of rare earth materials, reduce the costs, and improve the NVH performance of the motor.

The present disclosure further provides a vehicle.

The vehicle according to an embodiment of the present disclosure includes the motor according to any one of the foregoing embodiments. The rotor core 1 is provided with a plurality of mounting grooves. By mounting a permanent magnet 2 in each of a plurality of mounting grooves, and dividing a permanent magnet 2 arranged in a first mounting groove 11 into two uneven segments, a cogging torque generated during rotation of the rotor core 1 is reduced, thereby reducing torque fluctuation caused by the cogging torque and reducing jitter caused by the torque fluctuation. In addition, setting different materials for at least two permanent magnets 2 arranged in different mounting grooves helps reduce the usage quantity of rare earth materials, reduce the costs, and improve the NVH performance of the motor, thereby improving the overall NVH performance of the vehicle.

In the description of the present disclosure, it should be understood that orientation or position relationships indicated by the terms such as "center", "longitudinal", "transverse", "length", "width", "thickness", "on", "below", "front", "back", "left", "right", "vertical", "horizontal", "top", "bottom", "inside", "outside", "clockwise", "anticlockwise", "axial direction", "radial direction", and "circumferential direction" are based on orientation or position relationships shown in the accompanying drawings, and are used only for ease and brevity of illustration and description, rather than indicating or implying that the mentioned apparatus or component needs to have a particular orientation or needs to be constructed and operated in a particular orientation.

In addition, the terms "first" and "second" are used merely for the purpose of description, and shall not be construed as indicating or implying relative importance or implying a number of indicated technical features. Therefore, features defining "first" and "second" may explicitly or implicitly include one or more such features. In the description of the present disclosure, "a plurality of" means two or more unless it is specifically defined otherwise.

In the present disclosure; filling, unless expressly stated and defined otherwise, the terms "mounting", "connected", "connection", "fixed", etc. are to be construed broadly, for example, as fixed connection, detachable connection or integral connection, as mechanical connection or electrical connection, and as direct connection or indirect connection via an intermediary or communication inside two elements or interaction between two elements. A person of ordinary skill in the art may understand specific meanings of the terms in the present disclosure according to specific situations.

In the present disclosure, unless explicitly specified or limited otherwise, a first characteristic "on" or "under" a second characteristic may be the first characteristic in direct contact with the second characteristic, or the first characteristic in indirect contact with the second characteristic by using an intermediate medium. Moreover, the first feature "over", "above", and "up" the second feature may be that the first feature is directly above or obliquely above the second feature, or simply indicates that a horizontal height of the first feature is higher than that of the second feature. The first feature "under", "below" and "on the bottom of" the second feature may be that the first feature is directly below or obliquely below the second feature, or merely that the level of the first feature is lower than that of the second feature.

In description of the present disclosure, description of reference terms such as "one embodiment", "some embodiments", "example", "specific example", or "some examples" means including specific features, structures, materials, or features described in the embodiment or example in at least one embodiment or example of the present disclosure. In this specification, exemplary description of the foregoing terms does not necessarily refer to a same embodiment or example. Besides, the specific features, the structures, the materials, or the characteristics that are described may be combined in proper manners in any one or more embodiments or examples. In addition, a person skilled in the art may integrate or combine different embodiments or examples described in this specification and features of the different embodiments or examples provided that they are not contradictory to each other.

Although the embodiments of the present disclosure are shown and described above, it can be understood that, the foregoing embodiments are exemplary, and cannot be construed as a limitation to the present disclosure. Within the scope of the present disclosure, a person of ordinary skill in the art may make changes, modifications, replacement, and variations to the foregoing embodiments.

**Claims**

1. A rotor, comprising:

   a rotor core, the rotor core being provided with a plurality of mounting grooves; and
   a plurality of permanent magnets, the plurality of permanent magnets being arranged in the plurality of mounting grooves in a one-to-one correspondence manner, and materials of permanent magnets in at least two of the mounting grooves being different;
   wherein the plurality of mounting grooves comprise first mounting grooves, and a permanent magnet arranged in the first mounting groove comprises a first magnet and a second magnet that are arranged in a segmented manner.

2. The rotor according to claim 1, wherein a first material is used for the permanent magnet in the first mounting groove, and the first material is ferrite.

3. The rotor according to claim 2, wherein the first mounting grooves are arranged in a circumferential direction of the rotor core.

4. The rotor according to any one of claims 2 to 3, wherein the plurality of mounting grooves further comprise second mounting grooves, and the second mounting grooves are arranged on a radial outer side of the first mounting grooves.

5. The rotor according to claim 4, wherein a permanent magnet arranged in the second mounting groove comprises a third magnet and a fourth magnet that are arranged in a segmented manner.

6. The rotor according to claim 5, wherein a second material different from the first material is used for the permanent magnet arranged in the second mounting groove, and the second material is a rare earth material.

7. The rotor according to any one of claims 5 to 6, wherein in a width direction of the first mounting groove, a width of the first magnet is W1, and a width of the second magnet is W2; and

   in a width direction of the second mounting groove, a width of the third magnet is W3, and a width of the fourth magnet is W4;
   wherein the rotor satisfies the following relational formula: $0.1\ (W3+W4) \leq (W1+W2) \leq 3.3\ (W3+W4)$.

8. The rotor according to claim 7, wherein the rotor satisfies the following relational formula:

$$0.3\ (W3+W4) \leq (W1+W2) \leq 1.95\ (W3+W4).$$

9. The rotor according to any one of claims 5 to 7, wherein the plurality of mounting grooves further comprise third mounting grooves, the third mounting grooves extend in a radial direction of the rotor core, a third mounting groove is correspondingly arranged on each of both sides of a length direction of each of the first mounting grooves, and a length direction of the third mounting groove and the length direction of the first mounting groove have an angle.

10. The rotor according to claim 9, wherein a permanent magnet in the third mounting groove comprises a fifth magnet and a sixth magnet that are arranged in a segmented manner.

11. The rotor according to claim 10, wherein a material of the permanent magnet in the third mounting groove is a rare earth material.

12. The rotor according to any one of claims 10 to 11, wherein on a cross section perpendicular to a rotation axis of the rotor core, the rotor satisfies the following relational formula: $2.5\frac{L2}{L1} \leq \frac{L3}{L1} \leq 3.1\frac{L3}{L2}$;
    wherein L1 is a distance from an outermost side of the second mounting groove to an outer edge of the rotor core, L2 is a distance from an outermost side of the third mounting groove to the outer edge of the rotor core, and L3 is a distance from an outermost side of the first mounting groove to the outer edge of the rotor core.

13. The rotor according to claim 12, wherein the rotor satisfies the following relational formula:

$$2.52\frac{L2}{L1} \leq \frac{L3}{L1} \leq 1.07\frac{L3}{L2}.$$

14. The rotor according to any one of claims 10 to 13, wherein on a cross section perpendicular to the rotation axis of the rotor core, a length of a first connection line between a geometric center of the fourth magnet and a center of the rotor core is L4; a length of a second connection line between a geometric center of the third magnet and the center of the rotor core is L5; and

an angle between the first connection line and a d-axis of the rotor core is $\alpha1$, an angle between the second connection line and the d-axis is $\alpha2$, a width of the fourth magnet is W4, a width of the first magnet is W1, and the rotor satisfies the following relational formula:

$$0.1 * L4\frac{\cos 3a1}{\cos 3a2} \leq W1/W4 \leq 0.12 * L5\frac{\cos 3a1}{\cos 3a2}.$$

15. The rotor according to any one of claims 10 to 14, wherein on a cross section perpendicular to the rotation axis of the rotor core, a length of a third connection line between a geometric center of the fifth magnet and the center of the rotor core is L6; a length of a fourth connection line between a geometric center of the sixth magnet and the center of the rotor core is L7; and

an angle between the third connection line and a d-axis of the rotor core is $\alpha3$, an angle between the fourth connection line and the d-axis is $\alpha4$, a width of the third magnet is W3, a width of the second magnet is W2, and the rotor satisfies the following relational formula:

$$0.13 * L7\frac{\cos 3a4}{\cos 3a3} \leq W2/W3 \leq 0.13 * L6\frac{\cos 3a4}{\cos 3a3}.$$

16. The rotor according to any one of claims 10 to 15, wherein on a cross section perpendicular to the rotation axis of the rotor core, a length of a fifth connection line between a geometric center of the first magnet and the center of the rotor core is L8; a length of a sixth connection line between a geometric center of the second magnet and the center of the rotor core is L9; and

an angle between the fifth connection line and a d-axis of the rotor core is $\alpha5$, an angle between the sixth connection line and the d-axis is $\alpha6$, a width of the fifth magnet is W5, a width of the second magnet is W2, and the rotor satisfies the following relational formula:

$$0.14 * L8\frac{\cos 3a6}{\cos 3a5} \leq W2/W5 \leq 0.18 * L9\frac{\cos 3a6}{\cos 3a5}.$$

17. The rotor according to claim 16, wherein the rotor satisfies the following relational formula:

$$0.19 * L8\frac{\cos 3a6}{\cos 3a5} \leq W2/W5 \leq 0.13 * L9\frac{\cos 3a6}{\cos 3a5}.$$

18. The rotor according to any one of claims 10 to 17, wherein on a cross section perpendicular to the rotation axis of the rotor core, a length of a first connection line between a geometric center of the fourth magnet and a center of the rotor core is L4;

a length of a second connection line between a geometric center of the third magnet and the center of the rotor core is L5; and
the length of the third connection line between the geometric center of the fifth magnet and the center of the rotor core is L6;
wherein the rotor satisfies the following relational formula:

$$1.01\frac{L4}{L5} \leq \frac{L4}{L6} \leq 1.1\frac{L5}{L6}.$$

19. The rotor according to claim 18, wherein the rotor satisfies the following relational formula:

$$1.04\frac{L4}{L5} \leq \frac{L4}{L6} \leq 0.9\frac{L5}{L6}.$$

20. The rotor according to any one of claims 10 to 19, wherein in the circumferential direction of the rotor core, a ratio of a length of the first magnet to a length of the second magnet is greater than or equal to 1/7 and less than or equal to 1/2, and a ratio of a length of the third magnet to a length of the fourth magnet is greater than or equal to 1/7 and less than or equal to 1/2; and in a radial direction of the rotor core, a ratio of a length of the fifth magnet to a length of the sixth magnet is greater than or equal to 1/7 and less than or equal to 1/2.

21. The rotor according to any one of claims 10 to 20, wherein in the radial direction of the rotor core, widths of the first magnet and the second magnet are in a value range of 5 mm to 12 mm, and widths of the third magnet and the fourth magnet are in a value range of 2 mm to 7 mm; and in the circumferential direction of the rotor core, widths of the fifth magnet and the sixth magnet are in a value range of 2 mm to 7 mm.

22. A motor, comprising the rotor according to any one of claims 1 to 21.

FIG. 1

FIG. 2

FIG. 3

FIG. 4

FIG. 5

FIG. 6

FIG. 7

FIG. 8

FIG. 9

## INTERNATIONAL SEARCH REPORT

| International application No. |
|---|
| **PCT/CN2023/077678** |

**A. CLASSIFICATION OF SUBJECT MATTER**

H02K1/27(2022.01)i;H02K1/274(2022.01)i;H02K1/2789(2022.01)i;H02K21/12(2006.01)i

According to International Patent Classification (IPC) or to both national classification and IPC

**B. FIELDS SEARCHED**

Minimum documentation searched (classification system followed by classification symbols)

IPC:H02K

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT: 转子, 永磁, 磁铁, 磁体, 磁钢, 磁石, 磁条, 磁块, 分块, 分体, 分段, 材质, 材料, 第二, 多个, 铁氧体, 稀土, rotor, permanent magnet, sections, multiple, rare earth, ferrite

**C. DOCUMENTS CONSIDERED TO BE RELEVANT**

| Category* | Citation of document, with indication, where appropriate, of the relevant passages | Relevant to claim No. |
|---|---|---|
| PX | CN 217789421 U (BYD CO., LTD.) 11 November 2022 (2022-11-11) description, paragraphs [0040]-[0088], and figures 1-5 | 1-6, 22 |
| Y | CN 108429374 A (ZHUHAI GREE ELECTRIC APPLIANCES INC.) 21 August 2018 (2018-08-21) description, paragraphs [0038]-[0050], and figures 1-3 | 1-6, 22 |
| Y | CN 103580322 A (GUANGDONG MEIZHI PRECISION MANUFACTURING CO., LTD.) 12 February 2014 (2014-02-12) description, paragraphs [0004]-[0023], and figure 1 | 1-6, 22 |
| A | CN 114285200 A (HUAI'AN WELLING MOTOR MANUFACTURING CO., LTD. et al.) 05 April 2022 (2022-04-05) entire document | 1-22 |
| A | CN 203219035 U (EMERSON CLIMATE TECHNOLOGIES (SUZHOU) CO., LTD.) 25 September 2013 (2013-09-25) entire document | 1-22 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 April 2023** | **28 April 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

# EP 4 550 628 A1

## INTERNATIONAL SEARCH REPORT
### Information on patent family members

International application No.

**PCT/CN2023/077678**

| Patent document cited in search report | | | Publication date (day/month/year) | Patent family member(s) | | | Publication date (day/month/year) |
|---|---|---|---|---|---|---|---|
| CN | 217789421 | U | 11 November 2022 | None | | | |
| CN | 108429374 | A | 21 August 2018 | US | 2021167644 | A1 | 03 June 2021 |
| | | | | WO | 2019214222 | A1 | 14 November 2019 |
| | | | | CN | 208241429 | U | 14 December 2018 |
| CN | 103580322 | A | 12 February 2014 | None | | | |
| CN | 114285200 | A | 05 April 2022 | CN | 217135246 | U | 05 August 2022 |
| CN | 203219035 | U | 25 September 2013 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210784919